# EUROPÄISCHE PATENTANMELDUNG

(11) **EP 2 453 544 A2**
(43) Veröffentlichungstag der Anmeldung: **16.05.2012**
(21) Anmeldenummer: 11188359.1
(22) Anmeldetag: 09.11.2011
(51) Int. Cl.: H02G 9/10

(54) **Unterflur-Schacht**

(30) Priorität: 10.11.2010 DE 102010050964
(71) Anmelder: Berthold Sichert GmbH, 12277 Berlin (DE)
(72) Erfinder: Irmer, Günter, 13055 Berlin (DE); Perschon, Helmut, 12305 Berlin (DE)
(74) Vertreter: Alber, Norbert

(57) **Zusammenfassung**

Anstatt Unterflurschächte für Erdkabel als massive Betonteile herzustellen, werden sie erfindungsgemäß aus einer Vielzahl von leichten, nach innen verrippten, Kunststoffteilen zusammengesetzt, und zwar erst in der Ausschachtung im Erdboden. Auch das Hindurchführen der dort bereits vorstehenden Erdkabel durch die Kabeldurchgangsvertiefungen ist leicht möglich indem diese halbschalenförmig von unten und oben die entsprechenden Erdkabel angesetzt und dann der Rest des Wandaufbaus darüber und darunter erstellt wird. Die einzelnen Teile des Hauptkörpers greifen formschlüssig ineinander und erhalten ihre Stabilität durch vertikale Zuganker in den Innenecken, die die Bodenplatten gegenüber dem oben umlaufenden Abschlussrahmen verspannen. Aus einem entsprechenden Bausatz können Hauptkörper unterschiedlicher Abmessungen hergestellt werden.

## Beschreibung

### I. Anwendungsgebiet

Die Erfindung betrifft einen meist ebenerdig im Untergrund angeordneten Unterflurschacht, wie er benötigt wird, um Erdkabel in den Unterflurschacht seitlich hinein und wieder heraus zu führen und in der Regel in dem Unterflurschacht die an- und abgehenden Kabel miteinander zu verbinden und gegen Außenfeuchtigkeit mittels einer Muffe, meist einer Verguss-Muffe, abzudichten.

### II. Technischer Hintergrund

Ein solcher Unterflurschacht besitzt einen wannenförmigen Hauptkörper, der im Untergrund eingelassen ist und mit seinem oberen Rand etwa bündig mit der Erdoberfläche endet, und in dem die Kabelverbindungen untergebracht sind. Die die gesamte Oberseite des Hauptkörpers bildende Öffnung wird von einem aufgesetzten massiven Deckel verschlossen, der meist aus Metall besteht.

Der wannenförmige Hauptkörper dagegen besteht derzeit in aller Regel meist aus Beton oder manchmal aus Metall, beispielsweise Guss, und ist in der Regel einstückig gefertigt.

Das Problem ist dabei, die bereits im Untergrund verlegten Erdkabel, die folglich in einer provisorisch erstellten Ausschachtung des Erdbodens frei enden, in den Hauptkörper durch entsprechende Kabeldurchlässe in seinen Wänden einzuführen.

Da diese Erdkabel häufig relativ dick und damit biegesteif sind, lassen sie sich nicht einfach mit ihren freien Enden soweit umbiegen, dass sie leicht durch die Kabeldurchgangsvertiefungen eines solchen wannenförmigen Hauptkörpers hindurch gesteckt und dieser anschließend in die Ausschachtung hinein abgesenkt werden könnte, zumal die Erdkabel meist aus unterschiedlichen Richtungen in die Ausschachtung hineinragen.

Je biegesteifer die Erdkabel sind, umso größer muss die Ausschachtung angefertigt werden, um dies mit dem Hauptkörper zu bewerkstelligen.

Ein weiteres Problem ist, dass fast an jeder Einsatzstelle die Anzahl und auch der Durchmesser der vorhandenen Erdkabel, die in den Unterflurschacht hineingeführt werden müssen, eine andere ist. Um von einem einstückig hergestellten Hauptkörper nicht zu viele Varianten des Hauptkörpers vorhalten zu müssen, sind darin relativ viele Kabeldurchgangsvertiefungen hinsichtlich Anzahl und Verschiedenartigkeit der Durchmesser vorhanden. Dies führt jedoch dazu, dass die nicht benötigten Kabeldurchgangsvertiefungen ausreichend abgedichtet werden müssen.

Zwar soll der Unterflurschacht nicht vollständig wasserdicht sein, um eingedrungenes Sickerwasser nach unten abfließen zu lassen, jedoch muss eine ausreichende Dichtigkeit gegen Eindringen des Erdreichs und große Wassermengen vorhanden sein, vor allem im oberen Bereich.

### III. Darstellung der Erfindung

### a) Technische Aufgabe

Es ist daher die Aufgabe gemäß der Erfindung, einen Unterflurschacht sowie einen Bausatz zu seiner Herstellung und ein Verfahren zum Einbau des Unterflurschachtes zur Verfügung zu stellen, die gegenüber den bisher verwendeten Unterflurschächten Vorteile bei der Herstellung und Handhabung bietet.

### b) Lösung der Aufgabe

Diese Aufgabe wird durch die Merkmale der Ansprüche 1, 14 und 17 gelöst. Vorteilhafte Ausführungsformen ergeben sich aus den Unteransprüchen.

Da der wannenförmige Hauptkörper dieses Unterflurschachtes aus mehreren Teilen zusammengesetzt ist, kann er aus diesen Einzelteilen erst in der Ausschachtung im Erdboden zusammengebaut werden, was wesentliche Vorteile dadurch hat, dass die Einzelteile sehr viel leichter in die Ausschachtung eingebracht und auch unter die in die Ausschachtung vorstehenden Erdkabel eingebracht werden können.

Indem die Einzelteile verrippte Kunststoffteile sind ― bis auf die Zuganker und eventuelle weitere Versteifungen, die aus Metall bestehen ― sind sie relativ leicht und auch in der Ausschachtung und in ungünstiger Körperhaltung gut zu handhaben, was angesichts der Tatsache, dass ein solcher Unterflurschacht in der Aufsicht betrachtet durchaus eine Größe von 0,8 auf 1,5 Meter besitzen kann, ein wesentlicher Vorteil ist. Entsprechend große Betonteile könnten nur mit einem Hebegerät bewegt werden, während einzelne Wandteile oder die Pfosten aus Kunststoff von Hand bewegt und eingesetzt werden können.

Durch die nach innen weisende Verrippung besitzen die Bodenteile und Wandteile eine glatte Außenfläche, so dass im eingebauten Zustand das Erdreich später nicht in die offenen Vertiefungen zwischen nach außen weisenden Verschleppungen nachrutschen kann, was regelmäßig ein Absenken der Oberfläche um den Schacht herum zur Folge hat, und Vertiefungen des Unterflurschachtes verhaken kann, was ein späteres Ausbauen und Entnehmen wesentlich erschwert.

Vor allem jedoch erleichtern die Kabeldurchgangsteile mit ihren halbrunden Kabeldurchgangsvertiefungen das Erstellen der Kabeldurchgänge:

Zum einen können die Kabeldurchgangsteile an derjenigen Stelle hinsichtlich Umfang und Höhe des Hauptkörpers angeordnet werden, an denen sie aufgrund der Austrittsstelle der Erdkabel auch tatsächlich benötigt werden, so dass ein weiteres Ausgraben, Verbiegen und ähnliches der Erdkabel im wesentlichen vermieden wird. Da die Kabeldurchgangsteile halbrunde Durchgangsöffnungen aufweisen ― nach Herausschlagen der Sollbruch-Platte aus der entsprechenden Kabeldurchgangsvertiefung, die entlang einer halbrunden Sollbruchstelle sauber herausbricht ― und immer zwei Kabeldurchgangsteile von oben und unten gegen die Erdkabel spiegelbildlich gegeneinander gelegt werden müssen, um runde Kabeldurchgänge zu schaffen, können diese an die Erdkabel angelegt werden, ohne die freien Enden der Kabel durch geschlossene, runde Durchgangsöffnungen hindurch zu fädeln.

Da die Wandteile und die Kabeldurchgangsteile in vertikaler Richtung zu den vertikalen Pfosten vorerst verschiebbar sind, können auch umgekehrt zunächst die horizontalen Teile, vor allem die Kabeldurchgangsteile und ein eventuell darunter liegendes Wandteil, angeordnet werden ― nach dem als erstes die Bodenplatte auf den Boden der Ausschachtung gelegt wurde ― und dann die Pfosten vertikal von oben eingeschoben werden.

In der Praxis werden meist als erstes die benötigten Kabeldurchgangsteile an die Kabel angelegt und paarweise gegeneinander mit Spannschrauben fixiert, und vorher oder nachher ein darunter benötigtes geschlossenes Wandteil positioniert. Dann werden die Pfosten vertikal von oben eingeschoben und anschließend die übrigen geschlossenen Wandteile von oben zwischen die Pfosten eingeschoben.

Bei den Bodenplatten hat es sich als vorteilhaft erwiesen, dass diese sowohl nach oben als auch nach unten offene Verrippungen und dazwischen eine ― bis auf einige wenige Wasserablauföffnungen geschlossene ― Platte aufweist, da dann mittels der nach unten gerichteten Verrippungen durch hin und herschieben ein nivellieren und gezieltes Eingraben in den Boden der Ausschachtung vorgenommen werden kann. Die Verrippung nach oben ist in der Lage, kleine Wassermengen aufzunehmen, so dass ein Monteur trockenen Fußes auf den Verrippungen steht.

Zu diesem Zweck besitzen die Pfosten vertikal verlaufende, in Wandrichtung vorstehende, auf der Innenseite und Außenseite vorhandene Führungsvorsprünge, an oder zwischen denen die Enden der Wandteile und Kabeldurchgangsteile gehalten werden und vertikal verschoben werden können.

Auf diese Art und Weise wird eine Wand erstellt, indem mehrere Wandteile und ggf. Kabeldurchgangsteile übereinander angeordnet werden und seitlich in den Pfosten laufen, die in den Ecken und bei größerer Längserstreckung einer Wand auch in deren mittleren Bereich vorhanden sind.

Die Länge der Wandteile in Umfangsrichtung des Hauptkörpers kann gleichgroß oder für Längs- und Querseiten auch unterschiedlich groß sein, insbesondere in Längsrichtung ein mehrfaches der Erstreckung in Querrichtung betragen, so dass Wandteile mit immer der gleichen Länge mit Zwischenpfosten dazwischen verwendet werden können, was die Anzahl benötigter unterschiedlicher Einzelteile weiter reduziert.

In den Kabeldurchgangsteilen sind in der Regel halbrunde, nach oben oder unten offene, Kabeldurchgangsvertiefungen für immer den gleichen Kabeldurchmesser nebeneinander vorhanden, die zunächst alle mittels SollbruchPlatten verschlossen sind, aber es gibt Kabeldurchgangsteile für unterschiedliche Kabeldurchmesser und bei Bedarf können auch Kabeldurchgangsteile erstellt werden, in denen nebeneinander Öffnungen für unterschiedliche Kabeldurchmesser vorhanden sind, je nach Gegebenheiten am Einbauort.

Bei nicht benötigten Kabeldurchgangsvertiefungen werden diese SollbruchPlatten nicht entfernt.

Für die Höhe der Einzelteile gibt es ein Rastermaß, welches vorgegeben wird durch die Höhe der Kabeldurchgangsteile für den geringsten Kabeldurchmesser. Alle anderen Kabeldurchgangsteile als auch geschlossenen Wandteile besitzen eine Höhe, die dieser Höhe entspricht oder ein ganzzahliges Mehrfaches davon beträgt.

Auch die Pfosten, die Eckpfosten ebenso wie die Zwischenpfosten, können aus übereinander angeordneten und formschlüssig ineinandergreifenden Pfostenelementen zusammengesetzt sein, deren Höhe ebenfalls wiederum diesem Rastermaß entspricht oder einem ganzzahligen Mehrfachen davon.

Die Pfosten oder auch Pfosten-Elemente können im Inneren eine hohle Durchgangsöffnung von oben nach unten aufweisen, in die zur Stabilisierung ein Versteifungsprofil, meist aus Metall bestehend, in der Regel ein Metallrohr mit rundem Querschnitt, eingeschoben werden kann, welches sich dann vorzugsweise über die gesamte Höhe des Pfostens erstreckt.

Um auch die Bodenplatte einerseits nicht zu schwer werden zu lassen und andererseits gut in die Ausschachtung einbringen zu können, was in der Regel heißt, unter darin vorstehende Erdkabel einbringen zu können, ist die Bodenplatte geteilt, beispielsweise in der Längsmitte halbiert, oder noch stärker unterteilt, so dass die Einzelteile gut handhabbar und einbringbar sind.

Die Einzelteile der Bodenplatte werden gegeneinander verbunden, entweder zusammengesteckt oder vorzugsweise mittels außen an den Schmalseiten aufgeschraubter Verstärkungen meist aus Metall, etwa eines Flachmaterials aus Metall, gegeneinander fixiert.

Um dem Hauptkörper eine ausreichende Stabilität zu geben, wird der obere Abschluss durch einen vorzugsweise geschlossen umlaufenden oberen Abschlussrahmen realisiert, und der Zusammenhalt aller Teile des Hauptkörpers wird dadurch gesichert, dass dieser obere Abschlussrahmen mittels vertikal im Inneren des Hauptkörpers verlaufender Zuganker, die meist aus Metall bestehen, gegen die Bodenplatte des Hauptkörpers verspannt wird.

Die Bodenplatte weist dabei vorzugsweise einen außen umlaufenden erhöhten Rand auf, dessen Höhe vorzugsweise wiederum dem Höhen-Rastermaß des Hauptkörpers entspricht, und dessen Breite beispielsweise dem Abstand zweier benachbarter Verrippungen entsprechen kann. Dadurch wird die Stabilität der Bodenplatte verbessert. Bei einer Bodenplatte, die aus mehreren Teil-Bodenplatten zusammengesetzt ist, verläuft die Erhöhung nur an den Seiten, die später den äußeren Rand der gesamten Bodenplatte bilden.

Um für Bodenplatten nur eine einzige Spritzform zu benötigen, egal ob sie als einzelne Bodenplatte oder als Teil-Bodenplatte verwendet wird, kann in einem Spritz-Werkzeug ein beweglicher Schieber oder ein Zusatz-Werkzeugteil angeordnet sein, um die Erhöhung beispielsweise auf der vierten Randseite der Bodenplatte ebenfalls anzubringen oder wegzulassen.

Zur weiteren Versteifung kann der obere Abschlussrahmen, dessen Verrippung nach unten offen ist und an den übrigen drei Seiten glatte Außenseiten aufweist, auf seiner Unterseite ebenfalls durch Flachmaterialien aus Metall versteift sein, die dort aufgeschraubt werden.
Ebenso können diese Versteifungen beim Herstellen des oberen Abschlussrahmens als Spritzteil als Einlegeteile mit eingespritzt werden.

Da die Pfosten sowohl im oberen Rahmen als auch in der Bodenplatte formschlüssig gehalten sind, in dem ihre Enden dort formschlüssig eingesteckt sind, bewirkt das Verspannen von Boden gegen den oberen Abschlussrahmen, dass der gesamte Hauptkörper formschlüssig zusammengehalten wird und spätestens ab diesem Zeitpunkt kein vertikales Verschieben der Wandteile einer tief zu dem Pfosten mehr möglich ist.

Die Zuganker sind meist Metallstäbe, wobei das untere Ende beispielsweise hakenförmig doppelt gekröpft sein kann und unter eine Metalllasche greift, die mittels zwei oder mehr beabstandeter Schrauben von oben in die Verrippungen und dort vorgesehene Schraubkanäle der Bodenplatten verschraubt sind. Der Zuganker kann also mit seinem unteren hakenförmigen Ende unter die Metalllasche geführt werden, während sein oberes Ende durch einen seitlich offenen Schlitz oder eine gewöhnlich geschlossene Durchgangsöffnung in einer horizontalen Verstrebung in den Innenecken des Rahmens hindurchgeführt wird, und auf das obere, mit einem Außengewinde versehene Ende des Zugankers eine Spannmutter aufgeschraubt wird.

Um die paarweise von oben und unten an die Erdkabel angelegten Kabeldurchgangsteile mit ihren halbschalen-förmigen Durchgangsöffnungen vorzufixieren, können sie mittels vertikal durch das Paar hindurchgesteckter Fixierschrauben gegeneinander gehalten werden, was die Handhabung erleichtert, bis der entsprechende Wandteil vollständig erstellt und die begrenzenden vertikalen Pfosten eingebracht sind.

Um ein Scheuern des Mantels des Kabels an den Durchgangsöffnung hin zu vermeiden und auch das Eindringen von Schmutz in den Hauptkörper zu verhindern, wird eine Dichtung aus einem elastischen Material, beispielsweise einem Schaumstoff, zwischen Kabel und Durchgangsöffnung eingebracht, vorzugsweise in Längsrichtung des Kabels eingeschoben, wenn es sich um eine C- förmige Dichtungs-Muffe handelt.

### Bausatz:

Es ist offensichtlich, dass durch die Erstellung des Hauptkörpers aus Einzelteilen mittels ein und derselben Einzelteile auch unterschiedlich große Hauptkörper erstellt werden können:

Bei entsprechender Dimensionierung der Teile kann mit einer Teil-Bodenplatte ein Hauptkörper mit geringer Grundfläche, mit zwei hintereinander gesetzten Teil-Bodenplatten einer mit demgegenüber doppelter Grundfläche usw. erstellt werden, sofern die dafür notwendigen Wandteile und Kabeldurchgangsteile die entsprechende Erstreckung in ihrer Länge besitzen.

Ebenso ist klar, dass mittels vertikaler Pfosten unterschiedlicher Länge auch unterschiedlich tiefe Hauptkörper erstellt werden können.

Ein Bausatz umfasst beispielsweise folgende Teile als Minimum:
- wenigstens eine Sorte von Bodenplatten,
- wenigstens eine Sorte von vertikalen Pfosten in Form von Eckpfosten,
- wenigstens eine Sorte von vertikalen Pfosten in der Bauform als Zwischenpfosten,
- wenigstens eine Sorte von geschlossenen Wandteilen,
- wenigstens eine Sorte von Kabeldurchgangsteilen,
- wenigstens eine Sorte von einem oberen Abschlussrahmen,
- wenigstens eine Sorte von Zugankern und Spannmuttern.

Damit können Hauptkörper unterschiedlicher Tiefe und unterschiedlicher Grundflächen erstellt werden, wobei zusätzlich die Kabeldurchlässe an unterschiedlichen Stellen des Umfanges und auf unterschiedlichen Höhen eingebaut werden können und natürlich entsprechend der Anzahl und dem Durchmesser der dort mündenden Erdkabel.

Bei nicht benötigten Kabeldurchgangsvertiefungen wird die diese verschließen der Sollbruch-Platte nicht entfernt.

### Montageverfahren:

Der Hauptvorteil des aus diesen Einzelteilen erstellten Hauptkörpers besteht in der Montagefreundlichkeit, denn um in einer Ausschachtung im Boden, in die seitlich Erdkabel hinein vorstehen, einen solchen Hauptkörper zu erstellen, sollte dies so schnell wie möglich, mit geringem Kraftaufwand und möglichst ohne Hilfswerkzeuge möglich sein. Beim Austausch eines alten Schachtes sollte dies auch möglich sein, ohne die im Schacht untergebrachte Kabelverbindung zu lösen.

Dies ist mit dem vorliegenden Bausatz möglich, indem zunächst die Bodenplatte oder die Teilbodenplatten auf den Boden der Ausschachtung gelegt, dort nivelliert und auf die richtige Höhe gebracht werden durch entsprechendes Unterfüllen. Die einzelnen Teilbodenplatten werden dann gegeneinander fixiert, beispielsweise verrastet und/oder durch außen angesetzte, die Fugen übergreifende Metallstreifen, die in die Teilbodenplatten hineinverschraubt werden, versteift.

Dann werden als erstes die Wandbereiche erstellt, in denen Kabeldurchgangsöffnungen mit hindurch tretenden, bereits von der Seite her in die Ausschachtung vorstehenden, Erdkabeln erstellt werden müssen. Hierzu werden die entsprechenden Kabeldurchgangsteile mit den benötigten, geöffneten halbschalen-förmigen Kabeldurchgangs-Vertiefungen, die vorzugsweise eine Höhe wie die dazu passenden geschlossenen Wandteile besitzen, paarweise von oben und unten an die meist in einer horizontalen Ebene nebeneinander mündenden Erdkabel angelegt und mittels vertikal durch jedes Paar von Kabeldurchgangsteilen hindurch gesteckte und verschraubte Spannschrauben vorfixiert.

Da sich diese Kabeldurchgangsteile meist im mittleren Höhenbereich befinden, muss häufig darunter ein geschlossenes Wandteil angeordnet werden.

Nun sind als nächstes die vertikalen Pfosten auf den Ecken und entlang der Außenkanten auf die Bodenplatte aufzusetzen und dort formschlüssig zu verrasten.

Auch darüber können nun geschlossene Wandteile aufgesetzt werden, bis die gesamte Wandhöhe erstellt ist.

Auf diese Art und Weise werden nacheinander alle Wandbereiche erstellt, in denen Kabeldurchgänge vorhanden sein sollen.

Anschließend werden die übrigen Wandbereiche erstellt, bei denen dann umgekehrt vorgegangen werden kann, nämlich erst die entsprechenden Pfosten auf der Bodenplatte aufsetzen und dann die geschlossenen Wandteile von oben her zwischen zwei benachbarte Pfosten einzuschieben.

Dann wird von oben her der obere Abschlussrahmen auf die oberen Stirnflächen der Wandbereiche aufgesetzt, ggf. nachdem er durch Aufschrauben einer Metallverstärkung gegen seine nach unten offene Verrippung von unten her versteift wurde.

Der letzte Arbeitsschritt ist dann das Montieren der Zuganker in den Innenecken des Hauptkörpers und Verspannen der Bodenplatten gegenüber dem oberen Abschlussrahmen.

Dies erfolgt beispielsweise, indem zunächst in den Inneneckenbereichen auf der Oberseite der Bodenplatten Metalllaschen in die dort vorgesehenen Schraubkanäle hinein verschraubt werden, die in ihrem mittleren Bereich frei und untergreifbar sind.

Anschließend wird jeder Zuganker mit seinem hakenförmigen unteren Ende unter eine solche Zuglasche geführt und mit seinem oberen Ende in einen seitlich offenen Schlitz oder eine umfänglich geschlossene Durchgangsöffnung in einer Horizontalverstrebung des oberen Abschlussrahmens in dessen Innenecke geführt, wofür bei Bedarf der Abschlussrahmen in diesem Eckbereich nochmals angehoben werden kann.

Das über die horizontale Verstrebung des Abschlussrahmens vorstehende obere Ende des Zugankers ist mit einem Außengewinde ausgestattet, auf den dann eine Spannmutter aufgeschraubt wird, die die benötigte Zugspannung aufbringt.

Auch andere Arten von Zugankern und Verspannungen des Bodens gegenüber dem oberen Abschlussrahmen sind möglich.

Auf diese Art und Weise wird ein Hauptkörper erstellt, der zwar nicht vollständig wasserdicht ist, aber zumindest gegen eindringendes Erdreich und Schmutz ausreichend dicht ist und gegenüber Wasser dennoch das Abfließen von eingedrungenem Sickerwasser durch die immer vorhandenen Restspalte zwischen den zusammengefügten Bauteilen hindurch nach außen ermöglicht.

Anschließend kann in dem so erstellten und stabilisierten Hauptkörper die Verbindung der Erdkabel durch Muffen etc. vorgenommen werden und anschließend die obere Öffnung des Hauptkörpers durch einen aufgesetzten Deckel verschlossen werden.

### c) Ausführungsbeispiele

Ausführungsformen gemäß der Erfindung sind im Folgenden beispielhaft näher beschrieben. Es zeigen:
- Fig. 1a-c:: Den Hauptkörper des Unterflurschachtes im zusammengebauten Zustand und in Explosionsdarstellung,
- Fig. 2a, b:: den Unterflurschacht in Seitendarstellungen,
- Fig. 3:: die Kabeldurchgangsteile,
- Fig. 4a-c:: den oberen Rahmen,
- Fig. 5a-c:: die Zuganker.

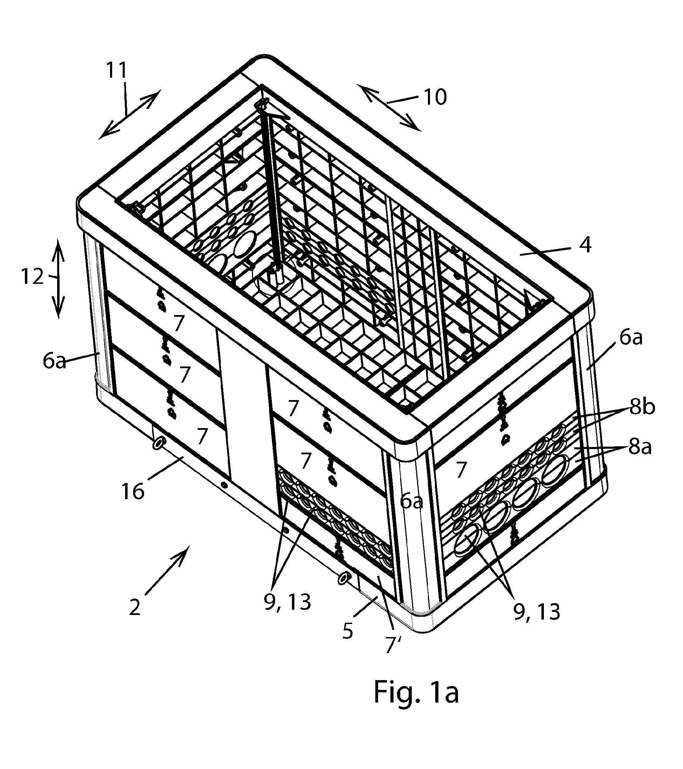

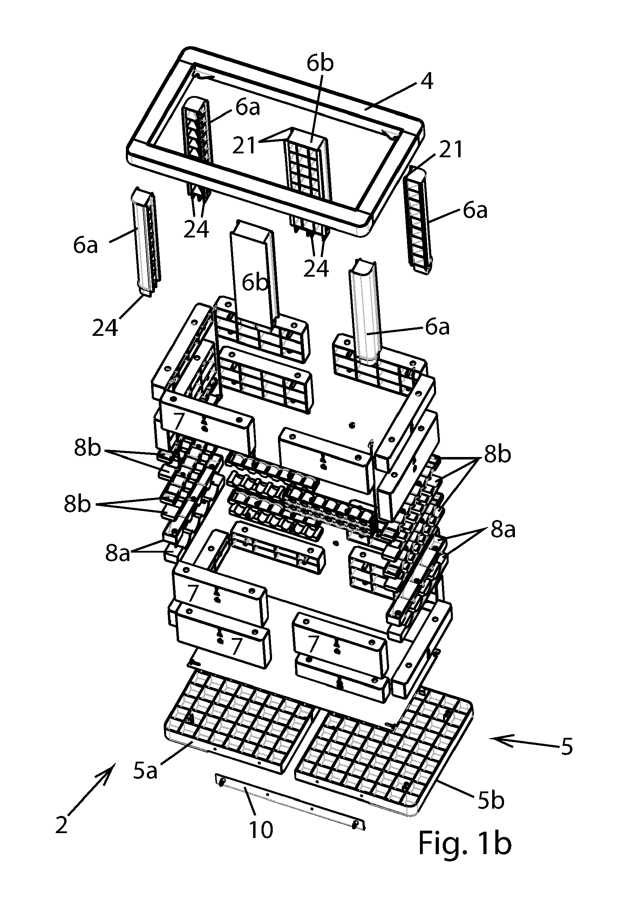

Der wannenförmige, oben offene Hauptkörper 2 ist in Fig. 1a im zusammengebauten Zustand dargestellt und in Fig. 1b in Explosionsdarstellung seiner Einzelteile.

Der Hauptkörper 2 ist in der Aufsicht betrachtet rechteckig, mit einer Längserstreckung 10 und einer geringeren Erstreckung auf der Schmalseite in Querrichtung 11.

Von unten nach oben besteht dieser Hauptkörper 2 zunächst aus einem Boden, der in diesem Fall aus zwei in Längsrichtung 10 sich aneinander anschließenden Teil-Bodenplatten 5a, b besteht, die gemeinsam die Bodenplatte 5 bilden und mittels Flachmaterials 16 aus Metall miteinander verbunden sind, welche jeweils in Längsrichtung 10 verlaufend, seitlich an den Schmalseiten der Teil-Bodenplatten 5a,b und die Fuge dazwischen überdeckend angelegt und mit den Teil-Bodenplatten 5a,b verschraubt sind.

Dabei können als Schrauben insbesondere Ösenschrauben verwendet werden, die anstelle eines normalen Schraubenkopfes eine Öse besitzen, so dass an diesen Ösen später ein Hebezeug eingehängt und der gesamte Hauptkörper 2 angehoben werden kann.

Auf die Oberseite der Bodenplatte 5 kann ferner ein Bodenblech 5' aufgelegt sein, um eine ebene Oberseite der Bodenplatte zu erzielen, falls dies gewünscht ist, denn die Bodenplatte ist vorzugsweise sowohl auf der Oberseite als auch der Unterseite verrippt.

In den Eckbereichen stecken in dieser Bodenplatte 5 Eckpfosten 6a, und es können zusätzlich im Verlauf einer Seite des Hauptkörpers 2, in diesem Fall in der Mitte der Längserstreckung 10 der langen Seite, Zwischenpfosten 6b vorhanden sein, die wie die Eckpfosten 6a, b der Aufnahme von dazwischen einzufügenden weiteren Wandteilen 7 dienen.

Zu diesem Zweck weisen die Pfosten, also Eckpfosten 6a und Zwischenpfosten 6b, vertikal verlaufende, in Richtung der Wand vorstehende Führungsvorsprünge 21 auf, entlang deren formschlüssig vertikal von oben dazwischen die Pfosten z.B. Wandteile 7 eingeschoben werden können, von denen meist mehrere übereinander erst die Höhe der Pfosten ergeben und damit den Wandaufbau.

Das Wesentliche des Hauptkörpers 2 besteht jedoch darin, dass anstelle der geschlossenen Wandteile 7 Kabeldurchgangsteile 8a, b zwischen die Pfosten gesetzt werden können, die somit die gleiche Längserstreckung wie die Wandteile 7 besitzen, in der Regel jedoch eine geringere Höhe. Die Höhe der Kabeldurchgangsteile 8a,b ist jedoch so bemessen, dass sich aus einer bestimmten Anzahl, vorzugsweise einer geraden Anzahl, von übereinander gesetzten Kabeldurchgangsteilen 8a, b die Höhe eines Wandteiles 7 erreichen lässt, von denen es ebenfalls unterschiedliche Höhen geben kann.

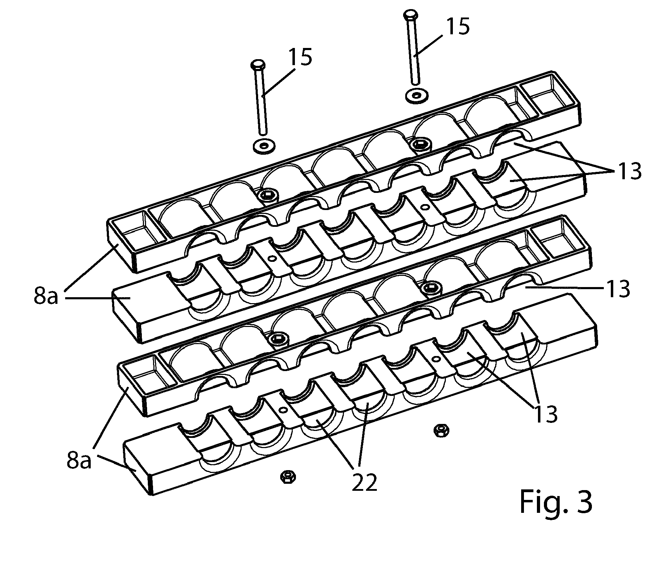

In den Kabeldurchgangsteilen 8a, b ― von denen in Figur 3 einige übereinander in Vergrößerung dargestellt sind ― sind ― über die Wanddicke durchgehend ― jeweils halbrunde, in der Oberseite oder Unterseite der Kabeldurchgangsteile 8a, b mündende, Kabeldurchgangsvertiefungen 13 mehrfach hintereinander über die Länge der Kabeldurchgangsteile und zueinander beabstandet angeordnet, die zunächst durch Sollbruchplatten 22 verschlossen sind, welche herausgebrochen werden können.

Durch Gegeneinanderlegen von zwei gleichen Kabeldurchgangsteilen z.B. 8a mit ihren benötigten, geöffneten Kabeldurchlässen gegeneinander weisend, ergibt sich somit eine Leiste, in der in Längsrichtung verlaufend runde Kabeldurchlässe 9 für je ein Erdkabel vorhanden sind, wie sie ja durch die Wandung in das Innere des Hauptkörpers 2 eingeführt und dabei möglichst abgedichtet werden sollen.

Da in jedem Anwendungsfall eines solchen Unterflurschachtes 1 die Anzahl der Erdkabel eine andere sein kann, und auch noch Erdkabel unterschiedlichen Durchmessers vorliegen können, benötigt jeder Hauptkörper 2 eine individuelle Anzahl von Kabeldurchlässen 9, die hinsichtlich Größe und auch Anordnung im Hauptkörper 2 individuell festgelegt werden müssen.

Deshalb gibt es beispielsweise Kabeldurchgangsteile 8a mit großen Kabeldurchgangsvertiefungen 13 und Kabeldurchgangsteile 8b mit kleineren Kabeldurchgangsvertiefungen 13. Die Kabeldurchgangsvertiefungen 13 sind jedoch in der Regel über die gesamte Länge der Kabeldurchgangsteile verteilt angeordnet.

Auf der Außenseite oder Innenseite oder in der Mitte, der Kabeldurchgangsteile, ist dabei die Kabeldurchgangsvertiefung 13 mit einer dünnen Sollbruchplatte 22 verschlossen, welches in Wandrichtung verläuft, und bei dem in der Regel als Kunststoffspritzteil hergestellten Kabeldurchgangsteil 8a, b einstückig mitgespritzt ist. Dessen Dicke ist jedoch so gering, dass bei benötigtem Kabeldurchlass 9 an dieser Stelle diese Sollbruchplatte 22 manuell ohne weiteres herausgebrochen werden kann, wofür es eine Sollbruchstelle gegenüber dem Rest des Kabeldurchgangsteiles 8a,b aufweisen kann.

Das übereinander gelegte Paar oder mehrere übereinander gelegte Paare von Kabeldurchgangsteilen 8a,b werden vertikal gegeneinander vorfixiert mittels Spannschrauben 15, die durch entsprechende vertikale Durchgangsöffnungen in den Kabeldurchgangsteilen 8a, b hindurch gesteckt und mittels einer aufgeschraubten Mutter mehrere übereinander liegende Kabeldurchgangsteile 8a, b zusammenspannen.

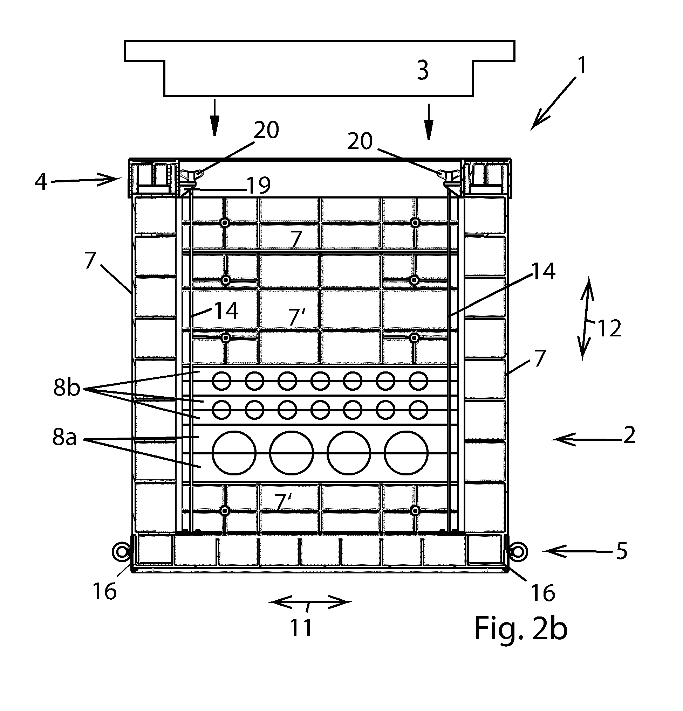

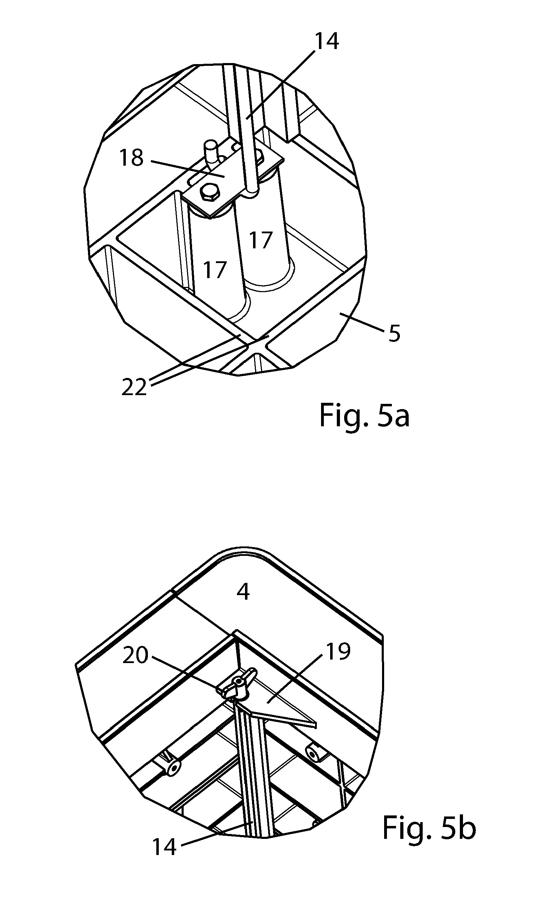

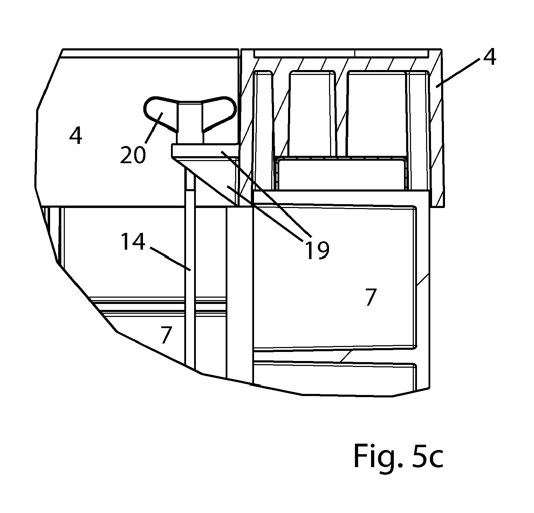

Wenn auf diese Art und Weise die umlaufenden Wände des Hauptkörpers 2 fertig gestellt sind, wird als oberer Abschluss ein vorzugsweise einstückiger oberer Rahmen 4 auf die Wände oben aufgelegt. Anschließend wird dieser obere Rahmen 4 mit Hilfe von vertikal verlaufenden Zugankern 14 in den Innenecken des Hauptkörpers 2 gegenüber dem Boden der Bodenplatte 5 verspannt, wie am Besten in Fig. 2b und in Details in den Fig. 5a, b, c, zu erkennen ist.

Der Zuganker 14 ist eine Metallstange, die ein unteres, U-förmig gekröpftes Ende aufweist und ein oberes Ende, an dem auf den Zuganker 14 ein Außengewinde aufgebracht ist, so dass eine Spannmutter 20 darauf aufgeschraubt werden kann.

Wie Fig. 5a zeigt, sind in dem entsprechenden Eckbereich, vorzugsweise in jedem der vier Eckbereiche, zwei beabstandet nebeneinander liegende und nach oben offene Schraubkanäle 17 in der Bodenplatte 5 ausgebildet, und zwar zusätzlich zu der nach oben offenen Verrippung 22 dieser Bodenplatte 5, die ja ― wie bei allen Kunststoffteilen des Hauptkörpers 2, nämlich Bodenplatte beziehungsweise Teil-Bodenplatten 5a, b, Rahmen 4, Kabeldurchgangsteile 8a, b, Wandteile 7, Pfosten 6a, b - zu einer Seite hin offen sein müssen.

Bei den Bodenplatten 5 beziehungsweise Teil-Bodenplatten 5a, b sind die Verrippungen 22 nach oben offen, bei den Wandteilen 7 nach innen, bei den Kabeldurchgangsteilen 8a, b zu der von den Kabeldurchgangsvertiefung 13 wegweisenden Seite, falls überhaupt Verrippungen vorhanden sind, und bei den Pfosten zur Richtung der angrenzenden Wandteile hin. Der obere Rahmen 4 ist dagegen mit seiner Verrippung nach unten offen.

Auf diese Art und Weise ist sichergestellt, dass diese Teile mit den geschlossenen glatten Seiten eine glatte, geschlossene Außenfläche des Hauptkörpers 2 ergeben.

In die nach oben offenen Schraubkanäle 17 gemäß Figur 5a werden durch zwei entsprechend beabstandete Durchgangsbohrungen in einer darauf aufgelegten Metalllasche 18 Befestigungsschrauben eingeschraubt, so dass die Metalllasche 18 an der Oberseite der Bodenplatte 5 fixiert ist und zwischen den Schraubkanälen 17 untergriffen werden kann von dem unteren U-förmig geköpften Ende eines Zugankers 14.

Der obere Rahmen 4 weist dagegen im Bereich seiner Innenecken jeweils eine horizontal in den Innenraum des Hauptkörpers 2 vorstehende plattenförmige horizontale Verstrebung 19 auf, die einen in der freien Außenkante dieser Verstrebung 19 mündenden Schlitz besitzt, der groß genug ist zum Einschieben des Zugankers 14, der dann mit seinem oberen endseitigen Außengewinde über die Oberseite der Verstrebung 19 vorsteht, wenn er mit seinem unteren Ende unter der Metalllasche 18 eingehängt ist.

Durch Aufschrauben der Spannmutter 20 auf das obere Ende des Zugankers 14 ― und die in allen vier Ecken des Hauptkörpers 2 ― wird nun der obere Rahmen 4 gegenüber der unteren Bodenplatte 5 verspannt, so dass damit ein einheitlich zu handhabender Hauptkörper 2 hergestellt ist.

Das Vorgehen bei der Herstellung des Hauptkörpers 2 wird dadurch bestimmt, dass ja in aller Regel in die Ausschachtung im Boden, in die der Hauptkörper 2 eingesetzt werden soll, bereits die freien Enden von seitlich aus dem Untergrund vorstehenden Erdkabeln hineinragen, die in das Innere des Hauptkörpers 2 reichen sollen und dessen Wände durch die Kabeldurchlässe 9 hindurch durchlaufen. Diese Erdkabel sind jedoch in der Regel so dick und starr, dass sie ― vor allem nahe an der Ausschachtungs-Wand ― kaum bewegt werden können.

Deshalb wird beim Einbau des Hauptkörpers 2 so vorgegangen, dass zunächst die Bodenplatte 5 beziehungsweise die mehreren benötigten Teil-Bodenplatten 5a, b ― je nach Abmessung des benötigten Hauptkörpers 2 ― unter den frei auslaufenden Erdkabeln auf den Boden der Ausschachtung gelegt werden mit der offenen verrippten Seite nach oben und der glatten geschlossenen Seite nach unten.

Bei mehreren Teil-Bodenplatten 5a, b werden diese durch an die Schmalseiten angesetztes Flachmaterial aus Metall gegeneinander verschraubt und gegebenenfalls durch Unterlegen von Erdmaterial oder Sand nivelliert und waagerecht eingestellt.

Anschließend werden um die häufig auch nebeneinander mündenden Erdkabel, die sich auf gleicher Höhe befinden, von unten und oben her jeweils ein Kabeldurchgangsteil z. B. 8a mit der passenden Größe der Kabeldurchgangsvertiefung 13 angesetzt und alle übereinander liegenden Kabeldurchgangsteile 8a, b mittels der Spannschrauben 15 gegeneinander vorfixiert.

Erst danach werden gegebenenfalls unterhalb der Kabeldurchgangsteile noch benötigte geschlossene Wandteile 7 darunter gesetzt, jeweils in einer solchen Position in Längsrichtung 10 und Querrichtung 11, dass diese auf den Randbereichen der Bodenplatte 5 aufsitzen können, und die späteren Wände des Hauptkörpers 2 bilden.

Danach werden von oben her vertikal Eckpfosten 6a und soweit vorhanden auch die Seitenposten 6b formschlüssig entlang der Enden der bereits vorhandenen Wandteile 7 und Kabeldurchgangsteile 8a,b entlang nach unten geschoben, und auf der Oberseite der Bodenplatte 5 aufgesetzt, wofür diese Pfosten auf ihre Unterseite vorstehende Zapfen 24 besitzen, die in eine entsprechende Gefachung zwischen den Verrippungen 22 der Bodenplatte 5 in deren Eckbereich passen.

Dann werden die Wände des Hauptkörpers 2 durch Einschieben der weiteren zum Vervollständigen der Wände benötigen geschlossenen Wandteile 7 von oben her zwischen die Pfosten 6a,b und deren Führungsvorsprünge 21 vervollständigt.

Da auch die Kabeldurchgangsteile 8a,b zwischen diesen Führungsvorsprüngen 21 sitzen, kann nach dem anschließenden Aufsetzen des oberen Rahmens 4 und dessen Verspannen mittels der Zuganker 14 gegenüber der Bodenplatte 5 weder ein Wandteil 7 noch ein Kabeldurchgangsteil 8a, b in Längs- oder Querrichtung oder in vertikaler Richtung relativ zum Rest des Hauptkörpers 2 bewegt werden.

Zusätzlich kann ein Bodenblech oder eine dünne Kunststoffplatte auf die nach oben offene Verrippung der Bodenplatte 5 aufgelegt werden, um dort eine ebene, geschlossene Fläche zu erzielen, was je nach Größe dieses Bodenbleches entweder nach Fertigstellen des Hauptkörpers 2 durch Einlegen von oben erfolgt, oder ― falls dieses Bodenblech auch bis zu den Außenkanten der Bodenplatte 5 durchgeht, vorzugsweise jedoch nicht im Eckbereich, also in den Bereichen, in denen die Pfosten eingesteckt werden ― auch unmittelbar nach dem Erstellen der Bodenplatte 5 aufgelegt werden.

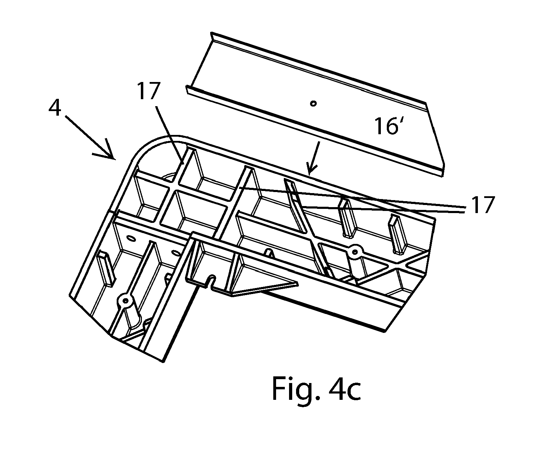

Vor dem Aufsetzen des oberen Rahmens 4 kann auf dessen Unterseite, in der seine Verrippungen 22 frei enden, zur Versteifung ebenfalls ein Flachmaterial 16' aus Metall aufgeschraubt werden, wie die Ansicht gemäß Figur 4c auf einen Eckbereich des Rahmens 4 von der Unterseite her zeigt.

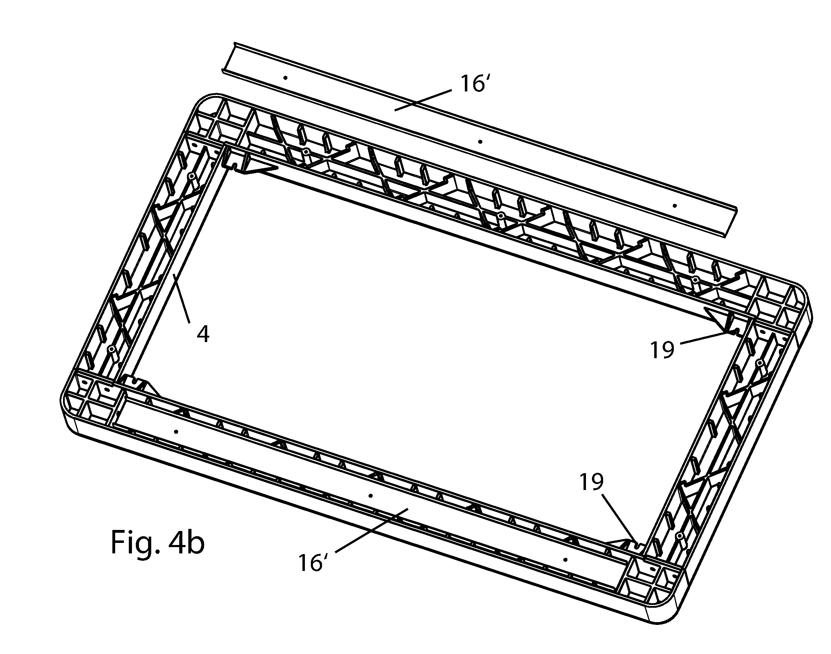

Vorzugsweise wird diese Art der Versteifung auf den beiden Längsseiten des Rahmens 4 aufgebracht, wie in Figur 4b ersichtlich.

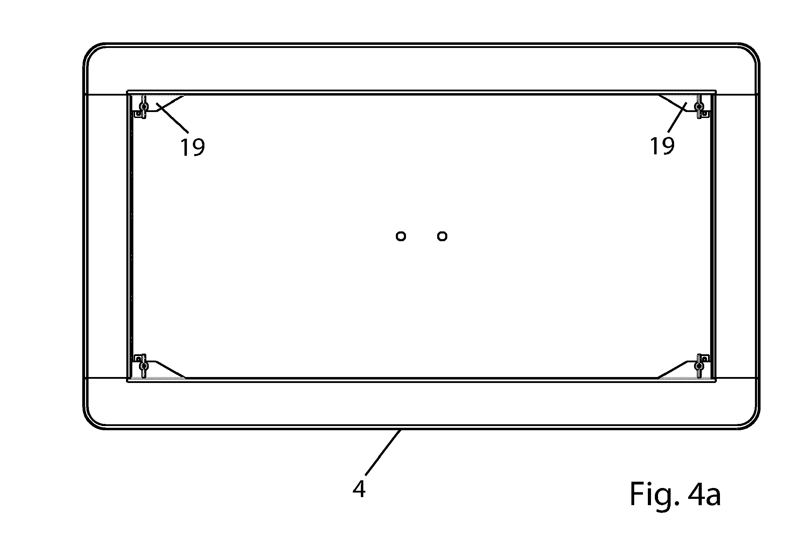

Figur 4a zeigt den Rahmen 4 in der Aufsicht von oben.

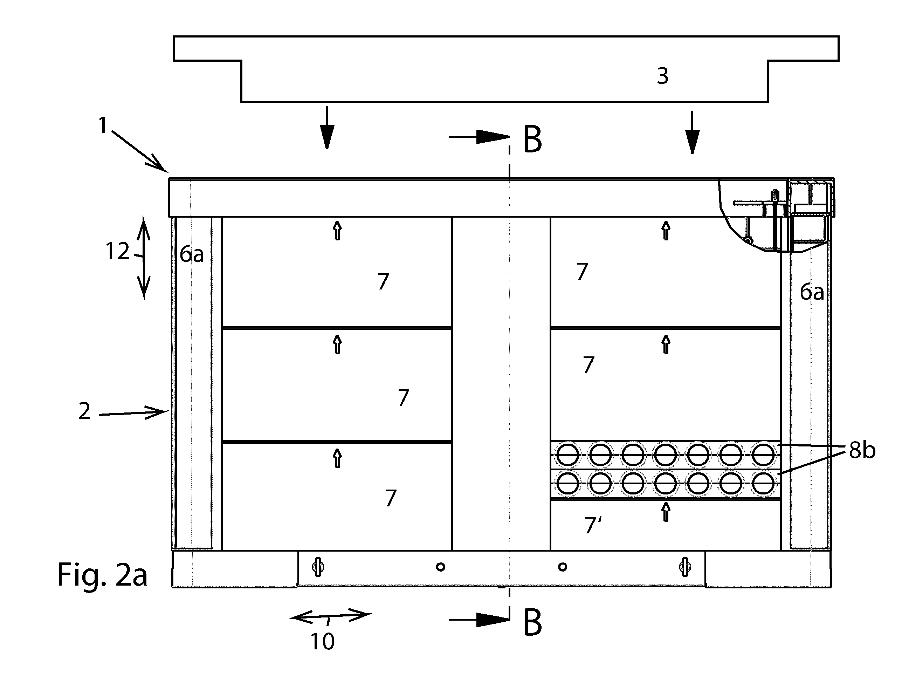

Die Figuren 2a und b lassen erkennen, dass die Höhen der unterschiedlich hohen Wandteile 7 und 7' zueinander passen sollten:

Das niedrigere Wandteil 7' besitzt eine Höhe, die der Hälfte der Höhe der hohen Wandteile 7 entspricht, zumindest jedoch einem ganzzahligen Bruchteil der Höhe des hohen Wandteiles 7 entsprechen sollte.

Die Höhe der Kabeldurchgangsteile 8a, b ist so festgelegt, dass eine gerade Anzahl von übereinander gelegten Kabeldurchgangsteilen, insbesondere zwei Kabeldurchgangsteilen, die Höhe eines der Wandteile 7, 7' ergibt. Ferner sind die Kabeldurchgangsteile (8b) für kleine Kabel genau halb so hoch wie die Kabeldurchgangsteile (8a) für die großen Kabel.

In der Darstellung der langen Seite des Hauptkörpers 2 gemäß Figur 2a sind zwischen einem Eckpfosten 6a und dem Zwischenpfosten 6b auf einer Seite nur große Wandteile 7 übereinander, in diesem Fall drei solcher Wandteile 7 übereinander, vorhanden, die zusammen die Höhe der Pfosten 6a,b ergeben, während auf der anderen Seite nur zwei solcher großer Wandteile 7 übereinander vorhanden sind, und der Höhenbereich des untersten großen Wandteiles geschlossen wird durch ein niedriges Wandteil 7' und zwei Paare von Kabeldurchgangsteilen 8b mit kleineren Kabeldurchlässen 9, die zusammen die Höhe der anderen Hälfte eines großen hohen Wandteils 7 ausmachen.

Das niedrige Wandteil 7' befindet sich dabei unterhalb der Kabeldurchgangsteile 8a,b, die Kabeldurchgangsteile könnten jedoch auch auf jeder beliebigen anderen Höhenposition angeordnet werden, durch ein entsprechendes darüber und darunter Anordnen von niedrigen und hohen Wandteilen 7.

Figur 2b zeigt dagegen die Aufsicht auf eine Stirnseite des Hauptkörpers 2, also die Seite mit der geringeren Längenausdehnung, wobei die Seitenwände im Schnitt dargestellt sind.

Dies zeigt die nach innen offene Verrippung und nach außen durchgehend geschlossene Fläche der Wandteile 7. In der Stirnwand sind in der unteren Hälfte wiederum Kabeldurchgangsteile 8a, b angeordnet, diesmal zwei Paare von gegeneinander gelegten Kabeldurchgangsteilen 8b mit kleinen Kabeldurchlässen und darunter ein Paar von Kabeldurchgangsteilen 8a mit großen Kabeldurchlässen 9.

Unter diesem Bereich mit Kabeldurchgangsteilen 8a, b befindet sich ein niedriges Wandteil 7', und darüber ebenfalls, über dem sich dann noch ein hohes Anteil 7 befindet, um die Höhe der Pfosten zu ergeben.

Der Bereich der Kabeldurchgangsteile 8a, b besitzt also in diesem Fall die Höhe eines hohen Wandteiles 7.

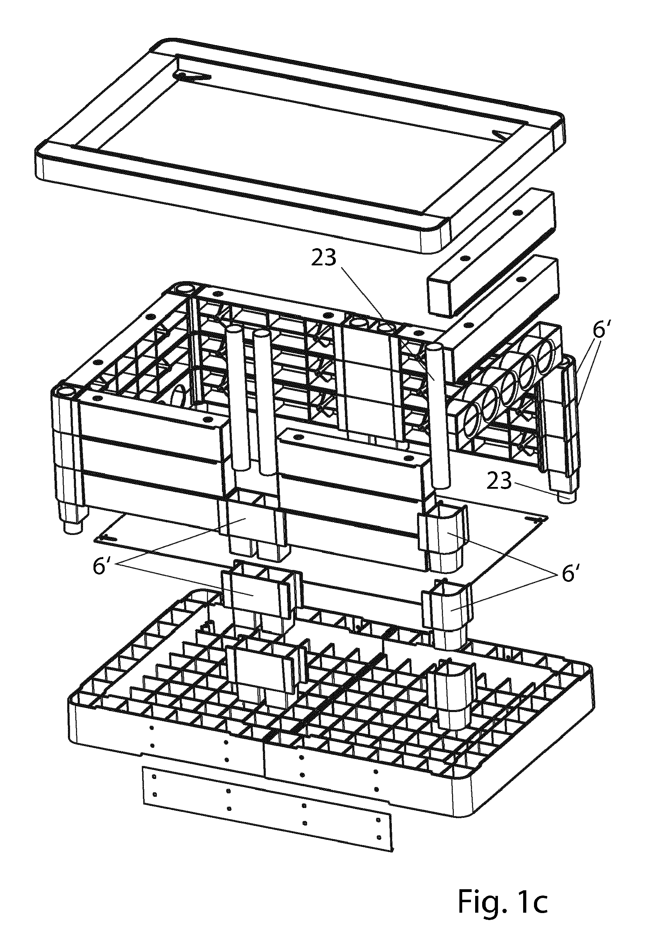

Figur 1c unterscheidet sich von Figur 1b dadurch, dass dort zum einen die Pfosten aus übereinander angeordneten, formschlüssig zusammengesteckten Pfostenelementen bestehen, deren Höhe dem kleinsten Höhenraster entspricht, und in denen ein versteifendes Metallrohr 23 eingesteckt ist, welches über die gesamte Pfostenhöhe durchgeht und sowohl in die Bodenplatte als auch den oberen Rahmen ragt.

Ferner besitzt die Bodenplatte einen erhöhten, umlaufenden Rand in der Höhe z. B. des Höhenrastermasses und der Breite eines Gefaches der Verrippung, um die Stabilität zu verbessern.

### BEZUGSZEICHENLISTE

- 1: Unterflurschacht
- 2: Hauptkörper
- 3: Deckel
- 4: Rahmen
- 5: Bodenplatte
- 5a,b: Teil-Bodenplatten
- 6a, b: Pfosten
- 6': Pfostenelement
- 7: Wandteile
- 8a,b: Kabeldurchgangsteile
- 9: Kabeldurchlässe
- 10: Längsrichtung, Längserstreckung
- 11: Querrichtung
- 12: vertikale Richtung
- 13: Kabeldurchgangsvertiefungen
- 14: Zuganker
- 15: Spannschrauben
- 16: Flachmaterial aus Stahl
- 16': Flachmaterial aus Metall
- 17: Schraubkanäle
- 18: Metalllasche
- 19: horizontale Verstrebung
- 20: Spannmutter
- 21: Führungsvorsprünge
- 22: Sollbruch-Platte
- 23: Versteifungsrohr

## Patentansprüche

1. Unterflurschacht (1) aus einem wannenförmigen Hauptkörper (2) und einem dessen obere Öffnung verschließenden Deckel (3), wobei der Hauptkörper (2) umfasst
- einen oberen, horizontal umlaufenden Rahmen (4),
- eine Bodenplatte (5),
- vertikale Pfosten (6a, b) dazwischen, insbesondere in den Ecken des Hauptkörpers (2),
- geschlossene Wandteile (7) zwischen den Pfosten (6a, b),
- Kabeldurchgangsteile (8a, b) mit Kabeldurchlässen (9) zwischen den Pfosten (6a, b),
**dadurch gekennzeichnet, dass**
- Bodenteile und Wandteile (7) sowie Pfosten (6a,b) verrippte Kunststoffteile sind und ebenso die Kabeldurchgangsteile (8a,b) Kunststoffteile sind,
- Wandteile (7) und Kabeldurchgangsteile (8a,b) mit den Pfosten (6a,b) formschlüssig verbunden sind,
- die Kabeldurchgangsteile (8a, b) jeweils halbrunde, durch Sollbruchplatten (22) verschlossene, Kabeldurchgangsvertiefungen (13) aufweisen und je zwei Kabeldurchgangsteile (8a, b) spiegelbildlich gegeneinander gelegt angeordnet sind,
- der Rahmen (4) gegen die Bodenplatte (5) verspannt ist, insbesondere mittels Zugankern (14), die insbesondere aus Metall bestehen.

2. Unterflurschacht (1) nach Anspruch 1,
**dadurch gekennzeichnet, dass**
- die verrippten Kunststoffteile die Verrippungen auf der Innenseite tragen und eine glatte, geschlossene Außenseite besitzen, und/oder
- die Wandteile (7) und Kabeldurchgangsteile (8a,b) in vertikaler Richtung (12) an den vertikalen Pfosten (6a,b) geführt sind.

3. Unterflurschacht (1) nach einem der vorhergehenden Ansprüche,
**dadurch gekennzeichnet, dass**
- die Kabeldurchgangsteile (8a, b) mittels zwischen den Kabeldurchgangsvertiefungen (13) hindurch geschobener vertikaler Spannschrauben (15) gegeneinander fixiert sind, insbesondere über die gesamte Höhe aller vorhandenen Kabeldurchgangsteile (8a,b), und/oder
- der Hauptkörper (2) in der Aufsicht betrachtet länglich rechteckig ist und die Pfosten (6a, b) mindestens in den Ecken, insbesondere auch in der Mitte der Längsseiten angeordnet sind.

4. Unterflurschacht (1) nach einem der vorhergehenden Ansprüche,
**dadurch gekennzeichnet, dass**
- die Bodenplatte (5) in der Mitte der Längserstreckung (10) des Hauptkörpers (2) in zwei Teil-Bodenplatten (5a,b) geteilt ist, und/oder
- die Teil-Bodenplatten (5a, b) durch eine seitlich die Fuge übergreifende Metallverstärkung, insbesondere ein Flachmaterial (16) aus Stahl, gegeneinander verschraubt und versteift sind.

5. Unterflurschacht (1) nach einem der vorhergehenden Ansprüche,
**dadurch gekennzeichnet, dass**
- der obere Abschlussrahmen (3) glatte, geschlossene Flächen auf der Oberseite, Innenseite sowie Außenseite aufweist, und die Verrippung nach unten offen ist, und/oder
- der obere Abschlussrahmen (3) auf seiner Unterseite Metallversteifungen, insbesondere in Form eines aufgeschraubten Flachmaterials (16') aus Metall, besitzt.

6. Unterflurschacht (1) nach einem der vorhergehenden Ansprüche,
**dadurch gekennzeichnet, dass**
- die Zuganker (14) in den Innenecken des Hauptkörpers (2) angeordnet sind, und/oder
- Kabeldurchgangsteile (8a, b) mit unterschiedlich großen Kabeldurchgangsvertiefungen (13) vorhanden sind.

7. Unterflurschacht (1) nach einem der vorhergehenden Ansprüche,
**dadurch gekennzeichnet, dass**
- innerhalb eines Kabeldurchgangsteiles (8a,b) die Größe der Kabeldurchgangsvertiefungen (13) immer gleich ist, und/oder
- Kabeldurchgangsteile (8a, b) in der Schmalseite und/oder in der Längsseite des Hauptkörpers (2) vorhanden sind.

8. Unterflurschacht (1) nach einem der vorhergehenden Ansprüche,
**dadurch gekennzeichnet, dass**
- die Pfosten (6a, b) in den oberen Rahmen (4) und/oder in der Bodenplatte (5) formschlüssig eingreifen, und/oder
- die Bodenplatte (5) geschlossene ebene Seitenflächen aufweist und ihre Verrippung nach oben und unten offen ist.

9. Unterflurschacht (1) nach einem der vorhergehenden Ansprüche,
**dadurch gekennzeichnet, dass**
- im Bereich der Innenecken an den nach oben offenen Verrippungen der Bodenplatten (5) nebeneinander zwei vertikale Schraubkanäle (17) vorhanden sind zum Aufschrauben einer Metalllasche (18), und das untere Ende des Zugankers (14) doppelt gekröpft ist und die Metalllasche (18) unten umgreift, und/oder
- in den Innenecken des oberen Rahmens (4) eine horizontale Verstrebung (19) mit einem Schlitz oder einer Durchgangsöffnung zum Hindurchführen des Zugankers (14) vorhanden ist, auf dessen oberes Ende eine Spannmutter (20) aufgeschraubt ist.

10. Unterflurschacht (1) nach einem der vorhergehenden Ansprüche,
**dadurch gekennzeichnet, dass**
- die Pfosten (6a, b) auf der Innenseite und Außenseite vertikal verlaufende, in Wandrichtung über den Pfosten (6a,b) vorstehende Führungsvorsprünge (21) aufweisen, zwischen denen die Wandteile (7) und Kabeldurchgangsteile (8a,b) angeordnet sind, und/oder
- mehrere Wandteile (7) übereinander angeordnet sind.

11. Unterflurschacht (1) nach einem der vorhergehenden Ansprüche,
**dadurch gekennzeichnet, dass**
- mehrere Kabeldurchgangsteile (8a, b), insbesondere Paare von Kabeldurchgangsteilen, übereinander angeordnet sind, und/oder
- die Höhe eines geschlossenen Wandteiles (7) oder eines Kabeldurchgangsteiles (8a, b) ein ganzzahliges Einfaches oder Vielfaches, insbesondere ein gerades ganzzahliges Vielfaches, der Höhe des Kabeldurchgangsteiles (8a,b) mit den kleinsten Kabeldurchgangsvertiefungen (13), des sogenannten Höhenrasters, besitzt.

12. Unterflurschacht (1) nach einem der vorhergehenden Ansprüche,
**dadurch gekennzeichnet, dass**
- die Pfosten (6a, b) in der Höhe zusammengesetzt sind aus Pfostenelementen, die insbesondere die Höhe des Höhenrasters besitzen und/oder
- die Pfosten (6a, b)vertikale Durchgangsöffnungen besitzen, in denen Versteifungsprofile aus Metall, insbesondere Versteifungsrohre, verlaufen, die sich über die gesamte Höhe der Pfosten erstrecken.

13. Unterflurschacht (1) nach einem der vorhergehenden Ansprüche,
**dadurch gekennzeichnet, dass**
die Bodenplatte einen erhöhten Rand aufweist, der insbesondere die Breite eines Gefaches zwischen den Verrippungen besitzt.

14. Bausatz zum Herstellen des Hauptkörpers (2) eines Unterflurschachtes (1) nach einem der vorhergehenden Ansprüche,
**dadurch gekennzeichnet, dass**
der Bausatz umfasst
- wenigstens eine Sorte von Teil-Bodenplatten (5a,b),
- wenigstens eine Sorte von vertikalen Pfosten (6a,b) in Form von Eckpfosten,
- wenigstens eine Sorte von vertikalen Pfosten (6a,b) in der Bauform als Zwischenpfosten,
- wenigstens eine Sorte von oberen Abschlussrahmen (3),
- wenigstens eine Sorte von geschlossenen Wandteilen (7),
- wenigstens eine Sorte von Kabeldurchgangsteilen (8a,b) mit Kabeldurchgangsvertiefungen (13),
- wenigstens eine Sorte von Zugankern (14) und Spannmuttern (20).

15. Bausatz nach Anspruch 14,
**dadurch gekennzeichnet, dass**
- der Bausatz unterschiedliche Arten von Kabeldurchgangsteilen (8a,b) umfasst, die jeweils gleichgroße, bei jeder Art aber unterschiedlich große Kabeldurchgangsvertiefungen (13) aufweisen und/oder
- der Bausatz Dichtungsmuffen, insbesondere C-förmige Dichtungsmuffen, umfasst.

16. Bausatz nach Anspruch 14 bis 15,
**dadurch gekennzeichnet, dass**
- der Bausatz Spannschrauben für Kabeldurchgangsteile umfasst und/oder
- der Bausatz vertikale Pfosten unterschiedlicher Länge umfasst.

17. Verfahren zum Einbau des Hauptkörpers (2) eines Unterflurschachtes in einer Boden-Ausschachtung, in der Erdkabel münden, mit folgenden Schritten:
a) Einlegen der Teil-Bodenplatten (5a,b) in die Ausschachtung und ggf. unter die dort seitlich mündenden Erdkabel,
b) Verbinden der Teil-Bodenplatten gegeneinander,
c) Anlegen der Kabeldurchgangsteile (8a,b) mit den durch Entfernen der Sollbruchplatten geöffneten, halbrunden Kabeldurchgangsvertiefungen (13) von oben und unten gegen die mündenden Erdkabel,
d) Ansetzen von geschlossenen Wandteilen (7) oberhalb und/oder unterhalb der Kabeldurchgangsteile (8a,b),
e) vertikales Einschieben der vertikalen Pfosten oder Pfostenelemente beidseits neben dem Wandabschnitt mit den Kabeldurchgangsteilen (8a,b),
f) vertikales Aufsetzen der übrigen Pfosten (6a,b) auf der Bodenplatte (5),
g) Erstellen der übrigen Wandbereiche durch vertikales Einschieben der geschlossenen Wandteile von oben zwischen die Pfosten (6a,b),
h) Aufsetzen des oberen Abschlussrahmens auf den oberen Rand der Wandteile (7) und Pfosten (6a,b),
i) Montieren der Zuganker (14) in den Innenecken des Hauptkörpers (2).

18. Verfahren nach einem der vorhergehenden Verfahrensansprüche,
**dadurch gekennzeichnet, dass**
- vor oder bei dem Einbringen der Teil-Bodenplatten (5a, b) in die Ausschachtung ein nivellieren und unterfüllen der Teil-Bodenplatten (5a, b) erfolgt, und/oder
- das Verbinden der Teil-Bodenplatten (5a, b) gegeneinander durch seitliches Aufschrauben eines Metallstreifens erfolgt.

19. Verfahren nach einem der vorhergehenden Verfahrensansprüche,
**dadurch gekennzeichnet, dass**
die gegen die Erdkabel angelegten Paare von Kabeldurchgangsteilen (8a, b) mittels vertikal durch das Paar hindurch gesteckter Spannschrauben (15) gegeneinander verschraubt werden.
